# EUROPÄISCHE PATENTSCHRIFT

(11) **EP 0 800 285 B1**
(45) Veröffentlichungstag und Bekanntmachung des Hinweises auf die Patenterteilung: **14.12.2005**
(21) Anmeldenummer: 97105376.4
(22) Anmeldetag: 01.04.1997
(51) Int. Cl.: H04B 7/005, H04L 25/03

(54) **Verfahren zur Parametrierung einer Empfangseinrichtung, sowie entsprechende Empfangseinrichtung und Funkstation**
Method for adjusting the parameters of a receiving apparatus, as well as corresponding receiving apparatus and radio station
Procédé de réglage des paramètres d'une installation de réception ainsi qu'installation de réception et station radio y relative

(30) Priorität: 04.04.1996 DE 19613624
(43) Veröffentlichungstag der Anmeldung: 08.10.1997
(73) Patentinhaber: SIEMENS AKTIENGESELLSCHAFT, 80333 München (DE)
(72) Erfinder: Schreib, Franz, Dipl.-Ing., 81475 München (DE)

(56) Entgegenhaltungen:
- US-A- 5 533 067
- TETSUYA SHIMAMURA ET AL: "AN AR PREFILTERING APPROACH TO ADAPTIVE EQUALIZATION" PROCEEDINGS OF THE INTERNATIONAL SYMPOSIUM ON CIRCUITS AND SYSTEMS. (ISCS),US,NEW YORK, IEEE, Bd. -, 3. Mai 1993 (1993-05-03), Seiten 730-733, XP000410102 ISBN: 0-7803-1281-3

## Beschreibung

Die Erfindung betrifft ein Verfahren zur Parametrierung einer Empfangseinrichtung eines Funksystem mit zugeordneter Antenneneinrichtung und mit einem Vorfilter und eine derartige Empfangseinrichtung bzw. eine Funkstation mit zumindest einer Empfangseinrichtung.

In einem Funksystem werden von einer sendenden Funkstation zu einer empfangenen Funkstation Informationen übertragen. Diese Informationen erreichen die empfangene Funkstation in Form von Empfangssignalen. Durch diverse externe Einflüsse erreichen die Empfangssignale die empfangende Funkstation über mehrere Laufwege. Die den verschiedenen Laufwegen entsprechenden Signalkomponenten treffen bei der empfangenden Funkstation zu aufeinanderfolgenden Zeitpunkten ein. In der empfangenden Funkstation besteht nun das Problem, diese Signalkomponenten, die zudem durch weitere Störkomponenten beeinflußt sein können, zu entzerren, die Fehler zu korrigieren und die übertragene Information zu dekodieren.

Aus Proakis, "Digital Communications", 1989, S.593-595 sind Vorfilter bekannt, die in einer Empfangseinrichtung vor der Detektierung Störkomponenten in den Empfangssignalen unterdrücken, dabei insbesondere Nachbarkanalstörungen. Ein Vorfilter besteht aus Verzögerungsgliedern, in denen die Empfangssignale stufenweise verzögert werden. Die Empfangssignale unterschiedlicher Verzögerung werden jeweils mit einem Filterkoeffizienten bewertet und anschließend aufsummiert. Die Filterkoeffizienten sind jedoch fest vorgegeben und der Vorfilter ist Teil eines Entzerrers, wobei der Detektor als einfacher Schwellwertentscheider ausgebildet ist.

Zur Auswertung der Empfangssignale werden innerhalb der Empfangseinrichtung weitere Parameter bestimmt. Diese Parameter sind z.B. aus W.Koch, "Optimum and sub-optimum detection of coded data distured by time-varying intersymbol interference", IEEE Proceedings 1990, S.1679-84 bekannte Kanalkoeffizienten. Diese in einem Kanalmodell verwendeten Kanalkoeffizienten dienen dazu, verschiedene nacheinander eintreffende Signalkomponenten eines Empfangssignals geeignet zu überlagern.

Es ist weiterhin bekannt, die aus den Empfangssignalen durch Übertragung ins Basisband und Analog/Digitalwandlung gewonnenen Antennendaten, sowie die Kanalkoeffizienten einem Detektor zuzuführen, der die Antennendaten entzerrt und die Fehlerkorrektur vornimmt. Die im Ausgang des Detektors rekonstruierten Symbole der Signale werden daraufhin in einem Dekoder, z.B. einem Viterbi-Dekoder, dekodiert.

Aus der CA 2 126 604 A ist ein Verfahren zur Parametrierung eines Empfängers eines Funksystems, bei dem Eingangssignale in einem Vorfilter so vorgefiltert werden, dass sie mit einem Viterbi-Algorithmus detektiert werden können. Um dem sich ändernden Mobilfunkkanal zu folgen, werden die Vorfilterkoeffizienten mit Gewichtsfaktoren gewichtet, die in Abhängigkeit zu den inversen Werten eines Fehlersignals gebildet werden.

Aus Mobilfunksystemen, siehe M.Mouly, M.-B.Pautet, "The GSM System for Mobile Communications", 49. rue Louise Bruneau, F-91120 Palaiseau, Frankreich, 1992, S.231-237, ist es bekannt, sogenannte Trainingssequenzen zu nutzen, um empfangende Funkstationen abzugleichen. Zu vorbestimmten Zeitpunkten sendet die sendende Funkstation eine Sequenz digitaler Daten, die der empfangenden Funkstation bekannt ist, d.h. deren Daten in der empfangenden Funkstation unverzerrt vorliegen.

Aufgabe der Erfindung ist es, ein Verfahren zur Parametrierung einer Empfangseinrichtung, sowie eine derartige Empfangseinrichtung bzw. Funkstation in einem Funksystem anzugeben, die eine einstellbare und verbesserte Störfestigkeit ermöglichen. Die Aufgabe wird durch das Verfahren nach Patentanspruch 1, und die Empfangseinrichtung nach Patentanspruch 6 bzw. die Funkstation nach Patentanspruch 13 gelöst. Weitere Ausbildungen des erfindungsgemäßen Gedankens sind den Unteransprüchen zu entnehmen.

In einem Funksystem wird eine Empfangseinrichtung mit Vorfilter dadurch parametriert, daß die Filterkoeffizienten des Vorfilters einstellbar sind und während des Betriebes der Empfangseinrichtung eine Anpaßung des Vorfilters an gegebene Anforderung zur Störfestigkeit adaptiv, zusammen mit der Bestimmung von Kanalkoeffizienten erfolgt. Damit wird es möglich, veränderten Empfangsbedingungen gerecht zu werden. Gerade in Funksystemen erweist sich eine solche Parametrierung der Empfangseinrichtung als vorteilhaft, da sich die Bedingungen im Funkkanal schnell ändern. Zur Einstellung der Filterkoeffizienten eignen sich beispielsweise in Funksystemen bekannte Trainingssequenzen.

Ensprechend einer vorteilhaften Ausgestaltung dieses erfindungsgemäßen Verfahrens werden empfangene Empfangssignale in der Empfangseinrichtung in digitale Signale umgewandelt und in dem der Empfangseinrichtung zugehörigen adaptiven Vorfilter stufenweise verzögert, die unterschiedlich verzögerten Empfangssignale jeweils mit Filterkoeffizienten bewertet und überlagert. Weiterhin enthält die Empfangseinrichtung ein Kanalmodell, mit dem der Funkkanal zwischen sendender und empfangender Funkstation nachgebildet werden kann. Das Kanalmodell wird dabei durch Kanalkoeffizienten charakterisiert, durch die das Kanalmodell an den realen Funkkanal angepaßt wird. Das Kanalmodell stellt beispeilsweise einen Filter mit endlicher Impulsantwort dar. Einem in der Empfangseinrichtung enthaltenen Detektor zur Entzerrung und Fehlerkorrektur der Antennendaten werden die Antennendaten und die bestimmten Kanalkoeffizienten zugeführt.

Während einer Trainingssequenz repräsentieren die Signale empfangene Testdaten, die zusätzlich ungestört in der Empfangseinrichtung vorliegen. Den empfangenen Testdaten zuordenbare Antennendaten und aus dem mit den Testdaten gespeisten Kanalmodell abgeleitete Modellgrößen werden einem Rechenwerk zugeführt. Im Rechenwerk, das ebenfalls der Empfangseinrichtung zugehörig ist, werden nun gleichzeitig die Filterkoeffizienten zur Unterdrückung von empfangenen Störgrößen und die Kanalkoeffizienten zum Ausgleich der Laufzeitunterschiede verschiedener Signalkomponenten eines Empfangssignals bestimmt. Dazu wird ein Algorithmus zu Hilfe genommen, der die Minimierung der Abweichung von Antennendaten der Trainingssequenz und Modellgrößen der Trainingssequenz vornimmt. Die bestimmten Filterkoeffizienten und Kanalkoeffizienten können danach auch zur Bewertung der Signale außerhalb der Trainingssequenz benutzt werden. Bei der Verarbeitung von digitalen Empfangssignalen ist es möglich, Vorfilter, Kanalmodell und Rechenwerk in einem digitalen Signalprozessor zu realisieren, wodurch zusätzlicher schaltungstechnischer Aufwand verringert wird.

Die Kombination von adaptiven Vorfilter und Kanalmodell, sowie die gleichzeitige Berechnung der Parameter für die Filterkoeffizienten und die Kanalkoeffizienten in einem Rechenwerk schafft eine wesentliche Verbesserung der Funktionsweise der Empfangseinrichtung in Bezug auf die Rekonstruktion von übertragenen Informationen. Mit einem einfachen Algorithmus können die zur Einstellung der Empfangseinrichtung benötigten Parameter gemeinsam bestimmt werden. Es ist dabei die Nebenbedingung zu beachten, daß die Triviallösung mit auf den Wert null gesetzten Filterkoeffizienten und Kanalkoeffizienten ausgeschlossen wird. Im Algorithmus ist eine entsprechende Nebenbedingung vorzusehen.

Je nach Anzahl der Verzögerungsglieder des adaptiven Vorfilters erfolgt eine verbesserte Störsignalunterdrückung, sowohl für Störer in Nachbarkanälen als auch im eigenen Kanal, insbesondere sinusförmige Störer. Die Zahl der Sinusstörer, die vollständig eliminiert werden können, entspricht der Zahl der Filterkoeffizienten minus eins. Das adaptive Vorfilter ergibt eine deutliche Verbesserung der Empfangsqualität, wodurch sich bei einem Einsatz der Funkstation in einem Funksystem auch ein Zugewinn an Systemleistung z.B. bei Mobilfunksystemen durch eine dadurch ermöglichte höhere Dichte an Mobilstationen ergibt.

Nach weiteren Ausgestaltungen des Erfindungsgegenstandes ist der Algorithmus zur Bestimmmung der Filterkoeffizienten und der Kanalkoeffizienten unter Ausschluß der Triviallösung derart ausgebildet, daß in der Empfangseinrichtung mehrere Sätze von Filterkoeffizienten vorliegen mit denen die empfangenen Testdaten jeweils bewertet werden und daraufhin die Kanalkoeffizienten mit einer minimalen Abweichung von Antennendaten und Modellgrößen bestimmt werden. Die Lösung mit der kleinsten Abweichung, d.h. die zugehörigen Filterkoeffizienten und dazu bestimmten Kanalkoeffizienten wird ausgewählt und dient zur Parametrierung der Empfangseinrichtung. Diese Lösung reduziert den Rechenaufwand auf die Bestimmung der Kanalkoeffizienten, währendessen die Filterkoeffizienten aus einer Menge bekannter Filterkoeffizienten ausgewählt werden.

Eine alternative Variante besteht darin, die Berechnung der kleinsten Fehlerquadrate oder eine Korrelationsrechnung zur Bestimmung der Filterkoeffizienten und der Kanalkoeffizienten ohne Vorauswahl heranzuziehen und damit bei in Kauf genommenen größeren Rechenaufwand die Filterkoeffizienten und Kanalkoeffizienten aus einer unendlich großen Menge von möglichen Werten auszuwählen, jedoch wiederum unter Ausschluß der Triviallösung. Die Triviallösung, bei der Filterkoeffizienten und Kanalkoeffizienten auf null gesetzt sind, entspricht einer möglichen, jedoch unsinnigen Lösung. Folglich ist es nötig, einen der Filterkoeffizienten oder der Kanalkoeffizienten auf einen Wert ungleich null festzusetzen.

Nach einer weiteren vorteilhaften Ausgestaltung des Erfindungsgegenstandes wird vor der endgültigen Bestimmung der Filterkoeffizienten und der Kanalkoeffizienten eine Synchronisation der empfangenen Testdaten mit den im Kanalmodell verarbeiteten Testdaten vorgenommen. Durch eine nicht vorhersehbare Laufzeit der Empfangssignale der Trainingssequenz zwischen Sender und Empfänger kann der Zeitpunkt des Eintreffens der empfangenen Testdaten in der Empfangseinrichtung nicht mit völliger Sicherheit vorhergesagt werden. Um den Beginn der Trainingssequenz und eine wirkungsvolle Berechnung der Filterkoeffizienten und Kanalkoeffizienten ohne störenden Einfluß einer ungenügenden Synchronisation zu gewährleisten, wird deshalb eine Verzögerung berechnet, mit der die Empfangssignale in der Empfangseinrichtung beaufschlagt werden. Die Verzögerung kann z.B. dadurch bestimmt werden, daß an mehreren Positionen des Datenstromes der Antennendaten eine Minimierung der Abweichung vorgenommen wird und die optimale Lösung, dies entspricht der Synchronisation, ausgewählt wird. Daraufhin wird diese Verzögerung auch außerhalb der Trainingssequenz verwendet.

In den übrigen Patentansprüchen ist eine Funkstation angegeben, deren Empfangseinrichtung zur Durchführung der Parametrierung entsprechend ausgebildet ist. Vorteilhafterweise wird diese Funkstation in Funksystemen, die im Zeitlagenmultiplex betrieben werden, eingesetzt und die Parametrierung für jede einzelne Zeitlage neu bestimmt. Ein Beispiel für ein im Zeitlagenmultiplex betriebenes Funksystem sind Mobilfunksysteme (GSM, GSM-ähnliche) oder Schnurlos-Kommunikationssysteme (DECT), wobei die Funkstation als Basisstation oder Mobilstation betrieben wird. Die erfindungsgemäße Empfangseinrichtung bzw. Funkstation und das erfindungsgemäße Verfahren werden insbesondere den speziellen Bedingungen eines Mobilfunksystems gerecht, da sich durch die Mobilität von Kommunikationsendgeräten sich verändernde Ausbreitungsbedingungen ergeben, worauf die Parametrierung der Empfangseinrichtung entsprechend angepaßt werden kann.

Im folgenden soll der Erfindungsgegenstand anhand von zeichnerischen Darstellungen näher erläutert werden.

Dabei zeigen
- FIG 1: ein Blockschaltbild einer Funkstation,
- FIG 2: ein Blockschaltbild eines Kanalschätzers während der Parametrierung,
- FIG 3: ein Blockschaltbild der Empfangseinrichtung während des Empfangs mit zuvor bestimmten Parametern außerhalb der Trainingssequenz.

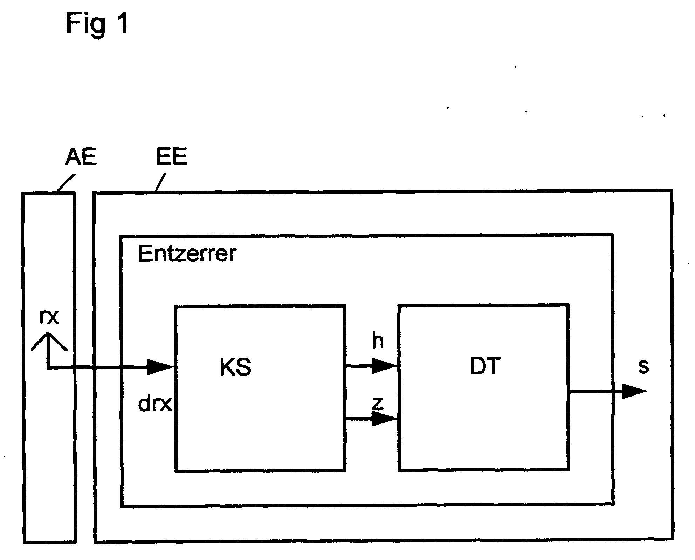

In FIG 1 ist die Empfangseinrichtung EE und die zugeordnete Antenneneinrichtung AE einer Funkstation dargestellt. Diese Funkstation ist Teil eines Funksystems und empfängt von einer sendenden Funkstation dieses Funksystems Empfangssignale rx. Das Funksystem ist beispielsweise ein GSM-Mobilfunksystem, bei dem die in FIG 1 dargestellte Funkstation eine Basisstation darstellt. Basisstationen sind jeweils über eine Luftschnittstelle mit Mobilteilen verbunden, die beispielsweise die sendende Funkstation darstellen. Im weiteren wird für die Basisstation der Empfangsfall dargestellt, nichtsdestotrotz besteht üblicherweise eine zweiseitige Verkehrsbeziehung, d.h. die Basisstation weist auch eine Sendeeinrichtung auf. Auch kann die Empfangseinrichtung des Mobilteils entsprechend der Erfindung ausgestaltet sein.

Aus den in der Antenneneinrichtung AE empfangenen Empfangssignalen rx werden z.B. durch eine Übertragung ins Basisband und darauffolgende Analog/Digitalwandlung digitale Signale drx erzeugt und einem Entzerrer, der innerhalb der Empfangseinrichtung EE angeordnet ist, zugeführt. Es ist zu bemerken, daß die Antennendaten z und die im folgenden zu berechnenden Koeffizienten c, h komplexe Werte darstellen, wenn die Basisbandumsetzung in In-Phase und Quadraturkomponenten unterscheidet.

Der Entzerrer enthält dabei einen Kanalschätzer KS und einen Detektor DT. Die digitalen Signale drx dienen als Eingangssignale für den Kanalschätzer KS, der mit dem Detektor DT verbunden ist und ihm aus den digitalen Signalen drx abgeleitete Antennendaten z und des weiteren im Kanalschätzer KS bestimmte Kanalkoeffizienten h zuführt.

Der Detektor DT nimmt eine Entzerrung und Fehlerkorrektur der Antennendaten z unter Zuhilfenahme der Kanalkoeffizienten h vor und erzeugt Symbole s, die weiteren Einrichtungen der Empfangseinrichtung EE, nicht dargestellt, zugeführt werden, in denen daraufhin eine Dekodierung und ggf. weitere Verarbeitungsschritte vorgenommen werden. Die Symbole s repräsentieren dabei die rekonstruierten, durch Entzerrung und Fehlerkorrektur verarbeiteten Signale rx.

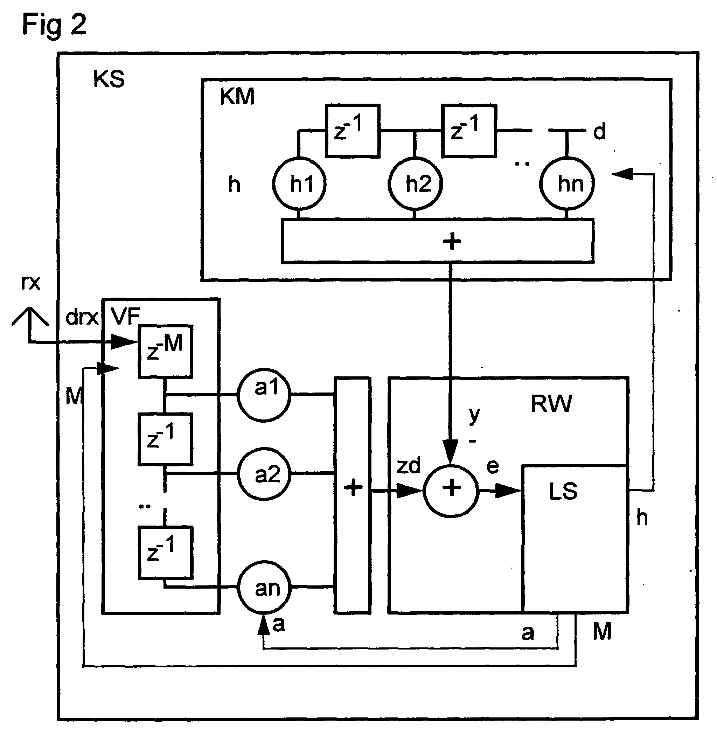

In FIG 2 wird die Funktionsweise des Kanalschätzers KS während der Parametrierung erläutert. Die im Kanalschätzer KS enthaltenen Einrichtungen KM, RW sind vorteilhafterweise in einem digitalen Signalprozessor implementiert. Durch entsprechende Algorithmen, können im digitalen Signalprozessor neben der Lösung des Problems der kleinsten Fehlerquadrate auch entsprechende Verzögerungen von Datenelementen und eine Simulation gemäß dem Kanalmodell KM erfolgen.

Die Parametrierung findet während des Empfangs einer Trainingssequenz statt. Während dieser Trainingssequenz werden die Testdaten d von einer sendenden Funkstation an die in FIG 1 dargestellte, empfangende Funkstation übertragen. Durch Mehrwegeausbreitung, Störung und Verzögerung beeinträchtigt treffen die Empfangssignale rx bei der empfangenden Funkstation ein und stehen dem Kanalschätzer KS als digitale Signale drx zur Verfügung.

Diese digitalen Signale drx werden in einem Speicherelement gespeichert und um eine Verzögerung M verzögert ausgegeben. Das Speicherelement ist dabei beispielsweise Teil eines adaptiven Vorfilters VF. Das Vorfilter VF enthält mehrere (z.B. 5 oder 6) Verzögerungsglieder z⁻¹, in denen die digitalen Empfangssignale stufenweise verzögert werden. Die digitalen Signale drx werden daraufhin jeweils durch Filterkoeffizienten a bewertet und anschließend aufsummiert, wobei die Aufsummierung ein Antennendatum zd der Trainingssequenz ergibt. Aufeinanderfolgende Empfangssignale rx ergeben so die Antennendaten zd der Trainingssequenz.

Die in der Empfangseinrichtung EE bekannten Testdaten d werden einem Kanalmodell KM zugeführt. Dieses Kanalmodell KM besteht aus Verzögerungsgliedern z⁻¹, die kettenförmig angeordnet sind. Die Testdaten d durchlaufen diese Verzögerungsglieder z⁻¹. Die unverzögerten Testdaten d und die am Ausgang eines jeden Verzögerungsgliedes z⁻¹ anliegenden verzögerten Testdaten d werden jeweils mit einem Kanalkoeffizienten h bewertet und anschließend zu einer Modellgröße y aufsummiert. In diesem Kanalmodell KM wird die Mehrwegeausbreitung simuliert, wobei nacheinander eintreffende Signalkomponenten zu einem gemeinsamen Signal überlagert werden. In Mobilfunksystemen reichen 3 bis 4 Verzögerungsglieder z⁻¹ aus, um die Mehrwegeausbreitung auszugleichen. Die Modellgrößen y sind die Ausgangsgrößen des Kanalmodells KM.

Weiterhin enthält der Kanalschätzer KS ein Rechenwerk RW, das die Antennendaten zd der Trainingssequenz und die Modellgrößen k vergleicht und die Abweichung e beider Werte bestimmt. Die Abweichung e wird innerhalb des Rechenwerkes RW einer Einheit LS zugeführt, die die für eine minimale Abweichung e erforderlichen Filterkoeffizienten a, Kanalkoeffizienten h und die Verzögerung M bestimmt.

Zur Parametrierung wird zuerst die Verzögerung M bestimmt. Die Einheit LS löst das Problem der kleisten Fehlerquadrate an mehreren Positionen des Empfangsdatenstromes, der durch die Antennendaten zd der Trainingssequenz gebildet wird. Die Position mit dem kleinsten quadratischen Fehler stellt die Synchronisationsposition dar. Damit ist auch die Verzögerung M bestimmt, die im weiteren bei der Bearbeitung der Empfangssignale rx auch außerhalb der Trainingssequenz für die gleiche Zeitlage verwendet wird. Bei der Lösung des Problems des kleinsten Fehlerquadrates wird die Nebenbedingung beachtet, daß nicht alle Filterkoeffizienten a und Kanalkoeffizienten h gleich null sein dürfen. Deshalb wird z.B einer dieser Werte auf einen Wert ungleich null voreingestellt.

Durch diese Verfahrensweise wird die Synchronisation und die Bestimmung der Filterkoeffizienten a und Kanalkoeffizienten h gleichzeitig bewirkt. Bei der Lösung des Problems der kleinsten Fehlerquadrate kann die Abweichung e vorteilhafterweise durch die Summe der quadrierten Kanalkoeffizienten h normalisiert werden, wodurch sich die Synchronisation weiter verbessern läßt. Anstelle der Lösung des Problems der kleinsten Fehlerquadrate können jedoch auch andere geeignete Algorithmen verwendetet werden, die eine Minimierung der Abweichung e herbeiführen. Die durch das Rechenwerk RW bestimmten Kanalkoeffizienten h, Filterkoeffizienten a und die Verzögerung M werden daraufhin auch außerhalb der Trainingssequenz zur Verbesserung des Empfangs der Empfangseinrichtung EE benutzt.

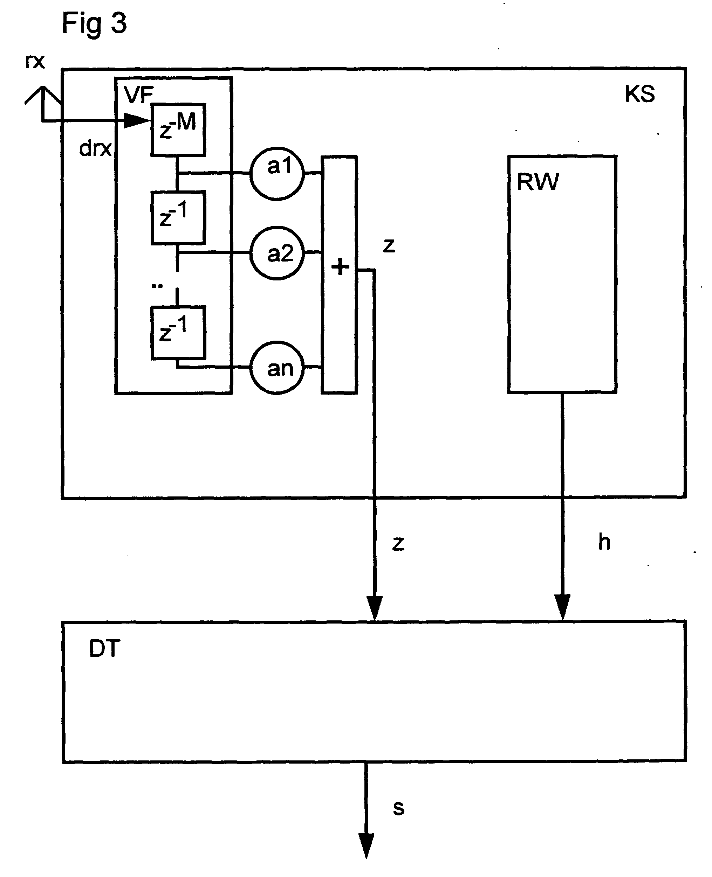

In FIG 3 ist der Empfang und die Weiterverarbeitung der Empfangssignale rx außerhalb der Trainingssequenz dargestellt. Der Kanalschätzer KS nimmt die digitalen Signale drx auf und verzögert sie entsprechend der zuvor bestimmten Verzögerung M bevor sie im adaptiven Vorfilter VF verzögert und durch die bestimmten Filterkoeffizienten a bewertet zu Antennendaten z überlagert werden. Diese Antennendaten z werden dem Detektor DT durch den Kanalschätzer KS zugeführt. Weiterhin werden auch die bestimmten Kanalkoeffizienten h vom Kanalschätzer KS an den Detektor DT übermittelt.

Dieser Detektor DT kann daraufhin die Entzerrung und Fehlerkorrektur der Antennendaten z vornehmen und erzeugt die Symbole s. Die erfindungsgemäße Empfangseinrichtung EE zeigt dabei eine verbesserte Unterdrückung von Störsignalen, die durch die Kombination von Vorfilterung und Berücksichtigung von Laufzeitunterschieden von Signalkomponenten in einem einzigen Algorithmus erreicht wird. Die Komplexität des adaptiven Vorfilters, also z.B. die Anzahl der Verzögerungselemente z⁻¹, spielt eine Rolle bei der Wirksamkeit der erfindungsgemäßen Funkstation bzw. des erfindungsgemäßen Verfahrens.

## Patentansprüche

1. Verfahren zur Parametrierung einer Empfangseinrichtung (EE) in einem Funksystem,
bei dem durch eine zugeordnete Antenneneinrichtung (AE) Empfangssignale (rx) empfangen, digitalisiert, einem Vorfilter (VF) zugeführt, und anschließend entzerrt und fehlerkorrigiert werden, wobei das Vorfilter (VF) als adaptives Vorfilter (VF) ausgestaltet ist
**dadurch gekennzeichnet,**
**daß** während des Empfangs eine gleichzeitige Einstellung von Filterkoeffizienten (a) des Vorfilters (VF) und Kanalkoeffizienten (h) eines Kanalmodells (KM) erfolgt.

2. Verfahren nach Anspruch 1, bei dem
durch die Empfangseinrichtung (EE)
- im adaptiven Vorfilter (VF) aus den Empfangssignalen (rx) abgeleitete digitale Signale (drx) verzögert werden, die unterschiedlich verzögerten digitalen Signale (drx) jeweils mit den Filterkoeffizienten (a) bewertet und zu Antennendaten (z, zd) überlagert werden,
- die Antennendaten (z), sowie die im Kanalmodell (KM) bestimmten, zur Berücksichtigung der Mehrwegeausbreitung der Empfangssignale (rx) vorgesehenen Kanalkoeffizienten (h) einem Detektor (DT) zur Entzerrung und Fehlerkorrektur der Antennendaten (z) zugeführt werden,
wobei während einer Trainingssequenz mit Testdaten (d):
- Modellgrößen (y) und den empfangenen Testdaten (d) zuordenbare Antennendaten (zd) einem Rechenwerk (RW) zugeführt werden, dabei sind die Modellgrößen (y) aus dem mit den in der Empfangseinrichtung (EE) vorliegenden, unverzerrten Testdaten (d) gespeisten Kanalmodell (KM) abgeleitet,
- im Rechenwerk (RW)
- die Filterkoeffizienten (a) zur Unterdrückung von empfangenen Störgrößen und
- die Kanalkoeffizienten (h) zum Ausgleich der Laufzeitunterschiede verschiedener Signalkomponenten eines Empfangssignals (rx)
gleichzeitig mit einem Algorithmus bestimmt werden,
der zur Minimierung der Abweichung (e) von Antennendaten (zd) der Trainingssequenz und Modellgrößen (y) der Trainingssequenz vorgesehen ist, und
diese bestimmten Filterkoeffizienten (a) und Kanalkoeffizienten (h) zur Bewertung der Empfangssignale (rx) außerhalb der Trainingssequenz vorgesehen sind.

3. Verfahren nach Anspruch 2,
bei dem der Algorithmus zur Bestimmung der Filterkoeffizienten (a) und der Kanalkoeffizienten (h) unter Ausschluß der Triviallösung (a=0; h=0) derart ausgebildet ist,
- daß die empfangenen Testdaten (d) mit mehreren vorbestimmten Sätzen von Filterkoeffizienten (a) bewertet und die Kanalkoeffizienten (h) mit einer minimalen Abweichung (e) von Antennendaten (zd) und Modellgrößen (y) bestimmt werden, und
- derjenige Satz von Filterkoeffizienten (a), bei dem die Abweichung (e) von Antennendaten (zd) und Modellgrößen (y) am geringsten ist, und die zugehörigen bestimmten Kanalkoeffizienten (h) ausgewählt wird.

4. Verfahren nach Anspruch 2,
bei dem der Algorithmus zur Bestimmung der Filterkoeffizienten (a) und der Kanalkoeffizienten (h) unter Ausschluß der Triviallösung (a=0; h=0) derart ausgebildet ist,
daß die Minimierung der Abweichung (e) von Antennendaten (zd) und Modellgrößen (y) mit der Berechnung der kleinsten Fehlerquadrate vorgenommen wird.

5. Verfahren nach einem der Ansprüche 2 bis 4,
bei dem vor Bestimmung der Filterkoeffizienten (a) und der Kanalkoeffizienten (h) durch Ermittlung einer Verzögerung (M) eine Synchronisation der empfangenen Testdaten (d) mit den im Kanalmodell verarbeiteten Testdaten (d) vorgenommen wird und die Verzögerung (M) zur der Bewertung der Empfangssignale (rx) auch außerhalb der Trainingssequenz vorgesehen ist.

6. Empfangseinrichtung (EE) in einem Funksystem,
- mit einer zugeordneten Antenneneinrichtung (AE) zum Empfang von Empfangssignalen (rx),
- mit einem adaptiven Vorfilter (VF)
- zur Verzögerung von aus den Empfangssignalen (rx) abgeleiteten digitalen Signalen (drx),
- zur Bewertung der unterschiedlich verzögerten digitalen Signale (drx) jeweils mit Filterkoeffizienten (a), und
zu deren Überlagerung zu Antennendaten (z, zd),
- mit einem Detektor (DT) zur Entzerrung und zur Fehlerkorrektur der Antennendaten (z) durch eine Auswertung der Antennendaten (z) und in einem Kanalmodell (KM) bestimmter, zur Berücksichtigung der Mehrwegeausbreitung der Empfangssignale (rx) vorgesehener Kanalkoeffizienten (h),
**dadurch gekennzeichnet,**
**daß** Mittel (RW) zur gleichzeitigen Einstellung der Filterkoeffizienten (a) des Vorfilters (VF) und der Kanalkoeffizienten (h) des Kanalmodells (KM) vorgesehen sind.

7. Empfangseinrichtung (EE) nach Anspruch 6,
- mit einem Rechenwerk (RW) zur Bestimmung
- der Filterkoeffizienten (a) zur Unterdrückung von empfangenen Störgrößen und
- der Kanalkoeffizienten (h) zum Ausgleich der Laufzeitunterschiede verschiedener Signalkomponenten eines Empfangssignals (rx) unter Verwendung eines Algorithmus zum Minimieren der Abweichung (e) von Antennendaten (zd) der Trainingssequenz und Modellgrößen (y) der in der Empfangseinrichtung (EE) vorliegenden Testdaten (d) während einer Trainingssequenz

8. Empfangseinrichtung (EE) nach Anspruch 7, die eingerichtet ist die Empfangssignale (rx) mit den bestimmten Filterkoeffizienten (a) und Kanalkoeffizienten (h) auch außerhalb der Trainingssequenz zu bewerten.

9. Empfangseinrichtung (EE) nach einem der Ansprüche 7 oder 8, bei der das adaptive Vorfilter (VF) eingerichtet ist während der Testsequenz die Signale (rx, drx) mit mehrerenvorbestimmten Sätzen von Filterkoeffizienten (a) zu bewerten und das Rechenwerk (RW) eingerichtet ist Kanalkoeffizienten (h) derart zu bestimmen, daß derjenige Satz von Filterkoeffizienten (a), bei dem die Abweichung (e) von Antennendaten (zd) und Modellgrößen (y) am geringsten ist, und die zugehörigen bestimmten Kanalkoeffizienten (h) unter Ausschluß der Triviallösung (a=0; h=0) ausgewählt werden.

10. Empfangseinrichtung (EE) nach einem der Ansprüche 7 bis 9, bei der das Rechenwerk (RW) eingerichtet ist während der Testsequenz die Filterkoeffizienten (a) und die Kanalkoeffizienten (h) mit einer minimalen Abweichung (e) von Antennendaten (zd) und Modellgrößen (y) nach der Methode der kleinsten Fehlerquadrate unter Ausschluß der Triviallösung (a=0; h=0) zu bestimmen.

11. Empfangseinrichtung (EE) nach einem der Ansprüche 6 bis 10, bei der das Rechenwerk (RW) das Bestimmen einer Verzögerung (M) zur Synchronisation der empfangenen Testdaten (d) mit den im Kanalmodell verarbeiteten Testdaten (d) unabhängig oder abhängig von der Bestimmung der Kanalkoeffizienten (h) und Filterkoeffizienten (a) vorsieht und
das adaptive Vorfilter (VF) die Verzögerung (M) bei der Bewertung der Signale (drx, rx) zur Synchronisation auch außerhalb der Trainingssequenz vorsieht.

12. Empfangseinrichtung (EE) nach Anspruch 10, die eingerichtet ist die Synchronisation **dadurch** zu bewirken, daß an mehreren Positionen der Antennendaten (zd) eine Bestimmung der Kanalkoeffizienten (h) und Filterkoeffizienten (a) vorgenommen wird und die Lösung mit der geringsten Abweichung (e) ausgewählt wird.

13. Funkstation mit einer Empfangseinrichtung (EE) nach einem der Ansprüche 6 bis 12.

14. Funkstation nach Anspruch 13,
die im Zeitlagenmultiplex betrieben wird und die die Bestimmung der Parameter (a, h, M) für jeweils eine Zeitlage vorsieht.

15. Funkstation nach einem der Ansprüche 14,
die als Basisstation eines Mobilfunksystems betrieben wird.

16. Funkstation nach einem der Ansprüche 14,
die als Mobilstation eines Mobilfunksystems betrieben wird.

## Claims

1. Method for adjusting the parameters of a receiving apparatus (EE) in a radio system,
in which receive signals (rx) are received by an assigned antenna device (AE), digitized, fed to a prefilter (VF) and subsequently equalized and corrected, with the prefilter (VF) being embodied as an adaptive prefilter (VF)
**characterized in that**
during of the receipt a simultaneous setting of filter coefficients (a) of the prefilter (VF) and channel coefficients (h) of a channel model (KM) is undertaken.

2. Method in accordance with claim 1, in which
through the receiving apparatus (EE)
- digital signals (drx) derived from the receive signals (rx) are delayed in the adaptive prefilter (VF), the differently delayed digital signals (drx) are each evaluated with the filter coefficients (a) and overlaid to form antenna data (z, zd),
- the antenna data (z), as well as channel coefficients (h) determined in the channel model (KM) provided for taking into account the multipath propagation of the receiver signals (rx) are fed to a detector for equalization and error correction of the antenna data (z),
whereby during a training sequence with test data (d):
- Model variables (y) and antenna data (zd) which can be assigned to the received test data (d) are fed to a processing unit (RW), in which case the model variables (y) are derived from the channel model (KM) stored with the undisturbed test data (d) in the receiving apparatus (EE),
- in the processing unit (RW)
- the filter coefficients (a) for suppression of received noise variables and
- the channel coefficients (h) to compensate for the runtime differences of various signal components of a receiver signal (rx)
are determined simultaneously with one algorithm,
which is provided for minimization of the deviation (e) of antenna data (zd) of the training sequence and model variables (y) of the training sequence, and
These specific filter coefficients (a) and channel coefficients (h) are provided for evaluation of the receiver signals (rx) outside the training sequence.

3. Method in accordance with claim 2,
in which the algorithm for determining the filter coefficients (a) and the channel coefficients (h) excluding the trivial solution (a=0; h=0) is embodied such that
- the received test data (d)is evaluated with a number of predetermined sets of filter coefficients (a) and the channel coefficients (h) are determined with a minimum deviation (e) of antenna data (zd) and model variables (y), and
- that set of filter coefficients (a), in which the deviation (e) between antenna data (zd) and model variables (y) is the least, and the associated channel coefficients (h) determined is selected.

4. Method in accordance with claim 2,
in which the algorithm for determining the filter coefficients (a) and the channel coefficients (h) excluding the trivial solution (a=0;h=0) is embodied such that the deviation (e) between antenna data (zd) and model variables (y) is minimized by computing the recursive least squares.

5. Method in accordance with one of the claims 2 to 4,
in which before the filter coefficients (a) and the channel coefficients (h) are determined, by establishing a delay (M) the received test data (d) is synchronized with the test data (d) processed in the channel model and the delay (M) is also provided for the evaluation of the receive signals (rx) outside the training sequence.

6. Receiving apparatus (EE) in a radio system,
- with an assigned antenna apparatus (AE) for receiving receive signals (rx),
- with an adaptive prefilter (VF)
- to delay digital signals (drx) derived from the receive signals (rx),
- to evaluate the differently delayed digital signals (drx) with filter coefficients (a) in each case, and
to overlay them to form antenna data (z, zd),
- with a detector (DT) for equalization and error correction of the antenna data (z) by evaluation of the antenna data (z) and in a channel model (KM) of specific channel coefficients (h) provided for taking account of the multipath propagation of the receive signals (rx),
**characterized in that**
means (RW) are provided for simultaneously setting the filter coefficients (a) of the prefilter (VF) and the channel coefficients (h) of the channel model (KM).

7. Receiving apparatus (EE) in accordance with claim 6,
- with a processing unit (RW) for determining
- the filter coefficients (a) for suppression of received noise variables and
- the channel coefficients (h) for equalizing the runtime differences of different signal components of a receiver signal (rx) using an algorithm to minimize the deviation (e) of antenna data (zd) of the training sequence and model variables (y) of the test data (d) present in the receiving apparatus (EE) during a training sequence.

8. Receiving apparatus (EE) in accordance with claim 7, which is set up to evaluate the receive signals (rx) with the specific filter coefficients (a) and channel coefficients (h) outside the training sequence as well.

9. Receiving apparatus (EE) in accordance with one of the claims 7 or 8 in which the adaptive prefilter (VF) is set up to determine signals (rx, drx) with a number of predetermined sets of filter coefficients (a) during the test sequence and the processing unit (RW) is set up to determine channel coefficients (h) such that the set of filter coefficients (a), in which the deviation (e) between antenna data (zd) and model variables (y) is the least and the associated specific channel coefficients (h) excluding the trivial solution (a=0; h=0) is selected.

10. Receiving apparatus (EE) in accordance with one of the claims 7 to 9 in which the processing unit (RW) is set up to determine during the test sequence filter coefficients (a) and channel coefficients (h) with a minimum deviation (e) between antenna data (zd) and model variables (y) in accordance with the recursive least squares method, excluding the trivial solution (a=0; h=0).

11. Receiving apparatus (EE) in accordance with one of the claims 6 to 10 in which the processing unit (RW) provides the determination of a delay (M) for synchronization of the received test data (d) with the test data processed in the channel model (d) independently of or depending on the determination of the channel coefficients (h) and filter coefficients (a) and
the adaptive prefilter (VF) provides the delay (M) in the evaluation of the signals (drx, rx) for synchronization outside the training sequence as well.

12. Receiving apparatus (EE) in accordance with claim 10, which is set up to effect the synchronization by determining the channel coefficients (h) and filter coefficients (a) at a number of positions of the antenna data (zd) and selecting the solution with least deviation (e).

13. Radio station with a receiving apparatus (EE) in accordance with one of the claims 6 to 12.

14. Radio station in accordance with claim 13,
which is operated in time division multiplexing mode and which provides for the determination of the parameters (a, h, M) for one time slot in each case.

15. Radio station in accordance with one of the claims 14, which is operated as a base station of a mobile radio system.

16. Radio station in accordance with one of the claims 14, which is operated as a mobile station of a mobile radio system.

## Revendications

1. Procédé de paramétrage d'un dispositif de réception (EE) dans un système radio,
dans lequel des signaux de réception (rx) sont reçus au moyen d'un dispositif d'antenne (AE) correspondant, sont numérisés, amenés à un préfiltre (VF) et ensuite égalisés et corrigés en cas d'erreur, le préfiltre (VF) étant exécuté comme un préfiltre adaptatif (VF),
**caractérisé en ce**
**que** pendant la réception, il y a un réglage simultané de coefficients de filtre (a) du préfiltre (VF) et de coefficients de canal (h) d'un modèle de canal (KM).

2. Procédé selon la revendication 1, dans lequel
au moyen du dispositif de réception (EE),
- des signaux numériques (drx) dérivés des signaux de réception (rx) sont retardés dans le préfiltre adaptatif (VF), dans lequel les signaux numériques (drx) retardés différemment sont respectivement évalués au moyen des coefficients de filtre (a) et sont superposés en données d'antenne (z, zd),
- les données d'antenne (z) ainsi que les coefficients de canal (h) définis prévus dans le modèle de canal (KM) pour tenir compte de la propagation par trajets multiples des signaux de réception (rx), sont amenés à un détecteur (DT) pour égaliser et corriger les erreurs des données d'antenne (z),
pendant une séquence d'entraînement, au moyen de données de test (d) :
- des grandeurs de modèle (y) et des données d'antenne (zd) attribuables aux données de test reçues (d) sont amenées à une unité de calcul (RW), les grandeurs de modèle (y) étant dérivées du modèle de canal (KM) alimenté avec les données de test (d) sans distorsion présentes dans le dispositif de réception (EE),
- dans l'unité de calcul (RW)
- les coefficients de filtre (a) destinés à supprimer les grandeurs perturbatrices reçues et
- les coefficients de canal (h) destinés à égaliser les différences de retard de différentes composantes de signal d'un signal de réception (rx)
sont déterminés simultanément au moyen d'un algorithme qui est prévu pour minimiser l'écart (e) entre les données d'antenne (zd) de la séquence d'entraînement et les grandeurs de modèle (y) de la séquence d'entraînement, et ces coefficients de filtre (a) et les coefficients de canal (h) définis étant prévus pour évaluer les signaux de réception (rx) en dehors de la séquence d'entraînement.

3. Procédé selon la revendication 2,
dans lequel l'algorithme pour déterminer les coefficients de filtre (a) et les coefficients de canal (h) en excluant la solution triviale (a = 0 ; h = 0) est exécuté de telle manière
- que les données de test (d) reçues sont évaluées au moyen de plusieurs jeux prédéfinis de coefficients de filtre (a) et que les coefficients de canal (h) sont déterminés au moyen d'un écart minimal (e) entre les données d'antenne (zd) et les grandeurs de modèle (y), et
- que le jeu de coefficients de filtre (a), dans lequel l'écart (e) entre les données d'antenne (zd) et les grandeurs de modèle (y) est le plus petit, et les coefficients de canal (h) définis correspondants sont sélectionnés.

4. Procédé selon la revendication 2,
dans lequel l'algorithme pour déterminer les coefficients de filtre (a) et les coefficients de canal (h) en excluant la solution triviale (a = 0 ; h = 0) est exécuté de telle manière que la minimisation de l'écart (e) entre les données d'antenne (zd) et les grandeurs de modèle (y) est effectuée au moyen du calcul des plus petits carrés d'erreurs.

5. Procédé selon l'une quelconque des revendications 2 à 4, dans lequel, avant de déterminer les coefficients de filtre (a) et les coefficients de canal (h), une synchronisation des données de test reçues (d) avec les données de test (d) traitées dans le modèle de canal est réalisée, par détection d'un retard (M), et dans lequel le retard (M) est prévu pour évaluer les signaux de réception (rx) également en dehors de la séquence d'entraînement.

6. Dispositif de réception (EE) dans un système radio,
- comprenant un dispositif d'antenne (AE) correspondant pour la réception de signaux de réception (rx),
- comprenant un préfiltre adaptatif (VF)
- pour retarder des signaux numériques (drx) dérivés des signaux de réception (rx),
- pour évaluer les signaux numériques (drx) retardés différemment, respectivement au moyen de coefficients de filtre (a), et
pour leur superposition en données d'antenne (z, zd)
- comprenant un détecteur (DT) pour égaliser et corriger les erreurs des données d'antenne (z) au moyen d'une évaluation des données d'antenne (z) et des coefficients de canal (h) définis, prévus dans un modèle de canal (KM) pour tenir compte de la propagation par trajets multiples des signaux de réception (rx),
**caractérisé en ce**
**que** des moyens (RW) sont prévus pour le réglage simultané des coefficients de filtre (a) du préfiltre (VF) et des coefficients de canal (h) du modèle de canal (KM).

7. Dispositif de réception (EE) selon la revendication 6,
- comprenant une unité de calcul (RW) pour déterminer
- les coefficients de filtre (a) destinés à supprimer les grandeurs perturbatrices reçues et
- les coefficients de canal (h) destinés à égaliser les différences de retard de différentes composantes de signal d'un signal de réception (rx) en utilisant un algorithme pour minimiser l'écart (e) entre des données d'antenne (zd) de la séquence d'entraînement et des grandeurs de modèle (y) des données de test (d) présentes dans le dispositif de réception (EE), pendant une séquence d'entraînement.

8. Dispositif de réception (EE) selon la revendication 7,
qui est exécuté pour évaluer des signaux de réception (rx) au moyen des coefficients de filtre (a) et des coefficients de canal (h) définis, également en dehors de la séquence d'entraînement.

9. Dispositif de réception (EE) selon l'une quelconque des revendications 7 ou 8,
dans lequel le préfiltre adaptatif (VF) est exécuté pour évaluer des signaux (rx, drx) au moyen de plusieurs jeux prédéfinis de coefficients de filtre (a) pendant la séquence de test et dans lequel l'unité de calcul (RW) est exécutée pour déterminer des coefficients de canal (h), de telle manière que le jeu de coefficients de filtre (a), dans lequel l'écart (e) entre les données d'antenne (zd) et les grandeurs de modèle (y) est le plus petit, et que les coefficients de canal (h) définis correspondants sont sélectionnés en excluant la solution triviale (a = 0 ; h = 0).

10. Dispositif de réception (EE) selon l'une quelconque des revendications 7 à 9,
dans lequel l'unité de calcul (RW) est exécutée pour déterminer, pendant la séquence de test, les coefficients de filtre (a) et les coefficients de canal (h) au moyen d'un écart minimal (e) entre les données d'antenne (zd) et les grandeurs de modèle (y) selon la méthode des plus petits carrés d'erreurs, en excluant la solution triviale (a = 0 ; h = 0).

11. Dispositif de réception (EE) selon l'une quelconque des revendications 6 à 10,
dans lequel l'unité de calcul (RW) prévoit la détermination d'un retard (M) pour la synchronisation des données de test (d) reçues avec les données de test (d) traitées dans le modèle de canal, indépendamment ou en fonction de la détermination des coefficients de canal (h) et des coefficients de filtre (a) et
dans lequel le préfiltre adaptatif (VF) prévoit le retard (M) lors de l'évaluation des signaux (drx, rx) pour la synchronisation, également en dehors de la séquence d'entraînement.

12. Dispositif de réception (EE) selon la revendication 10,
qui est exécuté pour causer la synchronisation du fait qu'une détermination des coefficients de canal (h) et des coefficients de filtre (a) est réalisée à plusieurs positions des données d'antenne (zd) et que la solution ayant l'écart (e) le plus petit est sélectionnée.

13. Station radio comprenant un dispositif de réception (EE) selon l'une quelconque des revendications 6 à 12.

14. Station radio selon la revendication 13, qui fonctionne en multiplex par intervalles de temps et qui prévoit la détermination des paramètres (a, h, M) pour respectivement un intervalle de temps.

15. Station radio selon la revendication 14, qui fonctionne comme station de base d'un système de radiocommunication mobile.

16. Station radio selon la revendication 14,
qui fonctionne comme station mobile d'un système de radiocommunication mobile.
